# EUROPEAN PATENT APPLICATION

(11) **EP 4 648 164 A1**
(43) Date of publication of application: **12.11.2025**
(21) Application number: 24836257.6
(22) Date of filing: 27.06.2024
(51) Int. Cl.: H01M 10/0565, H01M 10/058, H01M 10/052

(54) **SECONDARY BATTERY COMPRISING HETEROELECTROLYTE-BASED GEL POLYMER ELECTROLYTE AND METHOD FOR MANUFACTURING SAME**

(30) Priority: 04.07.2023 KR 20230086547
(71) Applicant: LG Energy Solution, Ltd., Seoul 07335 (KR)
(72) Inventor: LIM, Taeseob, Daejeon 34122 (KR); RYU, Jihoon, Daejeon 34122 (KR); KIM, Dong Kyu, Daejeon 34122 (KR); YOON, Yeo Min, Daejeon 34122 (KR); BYUN, Seoungwoo, Daejeon 34122 (KR)
(74) Representative: Hoffmann Eitle
(86) International application number: PCT/KR2024/008984
(87) International publication number: WO 2025/009809

(57) **Abstract**

A gel polymer secondary battery that can selectively permeate only lithium ions within a cell and maintain a state in which a heterogenous electrolyte is isolated. Thegel polymer secondary battery includes: a cathode impregnated with a catholyte containing a first gel polymer; an anode impregnated with an anolyte containing a second gel polymer; and an electrolyte layer interposed between the cathode and anode and including a third gel polymer. The third gel polymer content of the electrolyte layer is larger than the first gel polymer content of the cathode and the second gel polymer content of the anode.

## Description

### [TECHNICAL FIELD]

### Cross Citation with Related Application(s)

This application claims the benefit of Korean Patent Application No. 10-2023-0086547 filed on July 4, 2023 in the Korean Intellectual Property Office, the disclosure of which is incorporated herein by reference in its entirety.

### Technical Field

The present disclosure relates to a secondary battery comprising heterogenous electrolyte-based gel polymer electrolyte and a method for manufacturing the same.

### [BACKGROUND]

With technology development of electronic devices, and an increase in demand therefor, demand for secondary batteries as energy sources has been rapidly increasing. Among such secondary batteries, lithium secondary batteries having high energy density and voltage have been commercialized and widely used. Conventionally, an electrolyte in a liquid state, particularly, an ion conductive organic liquid electrolyte, in which a salt is dissolved in a non-aqueous organic solvent, has been mainly used as an electrolyte for a secondary battery. However, such electrolytes in liquid state have the disadvantage that not only the organic solvent is likely to be volatilized, but also it is low in safety due to combustion caused by ambient temperature and the temperature rise of the battery itself. Therefore, research has recently emerged to commercialize polymer electrolytes such as gel polymer electrolytes instead of electrolytes in liquid state.

On the other hand, the oxidation and reduction stability of the electrolyte components is important for the battery to operate over a wide operating voltage range. All secondary batteries which is used heretofore use a single electrolyte, however, when some solvents or additives, which are expected to have a significant effect in improving performance, decompose or form unwanted byproducts due to high-potential or low-potential side reactions, there is a problem that the battery performance deteriorates, which makes it impossible to use certain electrolyte components, or limits the operating potential, resulting in a decrease in cell voltage.

Therefore, there is a demand for the development of a heterogenous electrolyte-based secondary battery that can selectively permeate lithium ions while suppressing electrolyte flowability within the cell and has a wide operating voltage range.

### [DETAILED DESCRIPTION OF THE INVENTION]

### [Technical Problem]

Thus, the present inventors have attempted to solve problems that solvents or additives are decomposed or unwanted byproducts are formed due to high or low potential side reactions, leading to deterioration of battery performance, thereby providing a heterogenous electrolyte-based secondary battery having a wide operating voltage range.

### [Technical Solution]

Hereinafter, the gel polymer secondary battery and the like according to specific aspects of the disclosure will be described.

Terms or words used in the present specification and claims should not be construed as being limited to ordinary or dictionary meanings, and the present disclosure should be construed with meanings and concepts that are consistent with the technical idea of the present disclosure based on the principle that the inventors may appropriately define concepts of the terms to appropriately describe their own disclosure in the best way.

The terms used herein are provided to describe exemplary aspects but are not intended to limit the inventive concept. The singular forms include plural forms unless the context clearly indicates otherwise.

It should be understood that the terms "comprise," "include," "have", etc. are used herein to specify the presence of stated features, integers, steps, components or combinations thereof, but do not preclude the presence or addition of one or more other features, integers, steps, components, or combinations thereof.

### Gel Polymer Secondary Battery

According to one aspect of the present disclosure, there is provided a gel polymer secondary battery comprising: a cathode impregnated with a catholyte containing a first gel polymer; an anode impregnated with an anolyte containing a second gel polymer; and an electrolyte layer interposed between the cathode and anode and including a third gel polymer, wherein the third gel polymer content of the electrolyte layer is larger than the first gel polymer content of the catholyte and the second gel polymer content of the anolyte.

### Electrolyte Layer

In an exemplary aspect, the electrolyte layer may comprise a third gel polymer and an electrolyte. Of these, the third gel polymer may comprise an oligomer or polymer crosslinked in the presence of a polymerization initiator, and the electrolyte may comprise a lithium salt and a solvent, and optionally an additive.

In an exemplary aspect, the third gel polymer may comprise a crosslinked oligomer or polymer, and may comprise at least one selected from the group consisting of: a polyether-based oligomer, a polycarbonate-based oligomer, an acrylate-based oligomer, a polysiloxane-based oligomer, a phosphazene-based oligomer, a polyethylene-based oligomer, a urethane-based oligomer, an epoxy-based oligomer, a fluorine-based oligomer, a polyethylene oxide, a polyester sulfide, a polyvinyl alcohol, and a polyvinylidene fluoride. The third gel polymer may be a crosslinked oligomer or polymer in which a crosslinkable monomer and a solvent of an electrolyte, etc. is thermally cured in the presence of a polymerization initiator.

In this case, examples of the crosslinkable monomer may comprise any one selected from ethylene glycol di(meth)acrylate, poly(ethylene glycol)di(meth)acrylate, 1,6-hexanediol di(meth)acrylate, tri(propylene glycol)di(meth)acrylate, tris(2-(meth)acryloxyethyl) isocyanurate, trimethylolpropane tri(meth)acrylate, pentaerythritol di(meth)acrylate, pentaerythritol tri(meth)acrylate, pentaerythritol tetra(meth)acrylate, dipentaerythritol di(meth)acrylate, dipentaerythritol tri(meth)acrylate, dipentaerythritol tetra(meth)acrylate, dipentaerythritol penta(meth)acrylate, dipentaerythritol hexa(meth)acrylate, acrylic acid, isobornyl acrylate, acrylonitrile, ethylene glycol (meth)acrylate, ethylhexyl (meth)acrylate or methyl (meth)acrylate, TMPTA (trimethylpropane triacrylate) and ETPTA (trimethylpropane ethoxylate triacrylate), but not limited thereto.

In an exemplary aspect, the electrolyte layer may be a third electrolyte membrane or a separator impregnated with a third electrolyte. At this time, the third electrolyte may comprise a third gel polymer and an electrolyte. For example, as such separators, a general porous polymer film, for example, a porous polymer film produced by using a polyolefin-based polymer, such as an ethylene homopolymer, a propylene homopolymer, an ethylene/butene copolymer, an ethylene/hexene copolymer, an ethylene/methacrylate copolymer, may be used sorely, or they may be stacked and used. Alternatively, a general porous nonwoven fabric, for example, a high-melting-point glass fiber, polyethylene terephthalate fibers, or the like may be used, but is not limited thereto.

In another aspect, the third electrolyte membrane may be an electrolyte membrane which comprises a third electrolyte containing a third gel polymer and an electrolyte without a separate separator, and is defined by the third gel polymer. In an exemplary aspect, the electrolyte layer may be a polymer separator impregnated with a third electrolyte and coated with alumina. The alumina coating may employ one commonly used in lithium ion batteries, and may serve as a position where the third gel polymer matrix is densely formed in a pore space of the coating layer, so that components larger in size than Li ions can be physically isolated between the cathode and anode.

In an exemplary aspect, the third gel polymer content relative to the total weight of the electrolyte layer may be 10 to 30 wt.%. For example, the content may be 10 to 20 wt.% or 20 to 30 wt.%. In the above range, the gel polymer has a relatively high content compared to the electrode, and thus can selectively permeate only lithium ions within the cell.

In an exemplary aspect, the difference between the third gel polymer content and the first gel polymer content may be 10 to 20 wt.%. In addition, the difference between the third gel polymer content and the second gel polymer content may be 10 to 20 wt.%. In the above range, the gel polymer has a relatively high content compared to the electrode, and thus can selectively permeate only lithium ions within a cell.

In an exemplary aspect, the lithium salt acts as a source of lithium ions in the battery to enable basic operation of a lithium secondary battery, and can play a role in promoting the movement of lithium ions between the cathode and anode, and those commonly used in electrolytes for lithium secondary batteries can be used without limitation. For example, the lithium salt may include Li ⁺ as a cation, and may include at least one selected from the group consisting of: F⁻, Cl⁻, Br⁻, I⁻, NO₃⁻, N(CN)₂⁻, BF₄⁻, ClO₄⁻, AlO₄⁻, AlCl₄⁻, PF₆⁻, SbF₆⁻, AsF₆⁻, BF₂C₂O₄⁻, BC₄O₈⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, C₄F₉SO₃⁻, CF₃CF₂SO₃⁻, (CF₃SO₂)₂N⁻, (F₂SO₂)₂N⁻, CF₃CF₂(CF₃)₂CO⁻, (CF₃SO₂)₂CH⁻, CF₃(CF₂)₇SO₃⁻, CF₃CO₂⁻, CH₃CO₂⁻, SCN⁻ and (CF₃CF₂SO₂)₂N⁻ as an anion.

The lithium salt may be used alone or as a mixture of two or more thereof as necessary. The lithium salt may be appropriately changed within the range that can be normally used, but may be included in the gel polymer electrolyte composition at a concentration of 0.8 M to 2 M, specifically 0.8 M to 1.5 M, in order to obtain an optimal effect of forming a coating film for preventing corrosion on the electrode surface.

Further, in an exemplary aspect of the present disclosure, the solvent included the electrolyte is not limited as long as it may minimize decomposition due to an oxidation reaction during charge and discharge of a secondary battery and may exhibit desired characteristics with the additive. For example, an ether-based solvent, an ester-based solvent, an amide-based solvent or the like may be used alone or as a mixture of two or more thereof. In addition, at least a part of the solvent may be cured and crosslinked together with the above-mentioned crosslinkable monomer to form a third gel polymer.

As the ether-based solvent among the organic solvents, any one selected from the group consisting of dimethyl ether, diethyl ether, dipropyl ether, methylethyl ether, methylpropyl ether, and ethylpropyl ether, or a mixture of two or more thereof may be used, but is not limited thereto.

Furthermore, the ester-based solvent may include at least one compound selected from the group consisting of a cyclic carbonate compound, a linear carbonate compound, a linear ester compound, and a cyclic ester compound.

Specific examples of the cyclic carbonate compound may be any one selected from the group consisting of ethylene carbonate (EC), propylene carbonate (PC), 1,2-butylene carbonate, 2,3-butylene carbonate, 1,2-pentylene carbonate, 2,3-pentylene carbonate, vinylene carbonate, and fluoroethylene carbonate (FEC), or a mixture of two or more thereof.

Further, specific examples of the linear carbonate compound may be any one selected from the group consisting of dimethyl carbonate (DMC), diethyl carbonate (DEC), dipropyl carbonate, ethylmethyl carbonate (EMC), methylpropyl carbonate, and ethylpropyl carbonate, or a mixture of two or more thereof, but are not limited thereto.

Specific examples of the linear ester compound may be any one selected from the group consisting of methyl acetate, ethyl acetate, propyl acetate, methyl propionate, ethyl propionate, propyl propionate, and butyl propionate, or a mixture of two or more thereof, but are not limited thereto.

Specific examples of the cyclic ester compound may be any one selected from the group consisting of γ-butyrolactone, γ-valerolactone, γ-caprolactone, σ-valerolactone, and ε-caprolactone, or a mixture of two or more thereof, but are not limited thereto.

Among the ester-based solvents, since the cyclic carbonate-based compound has high permittivity as a highly viscous organic solvent and thus well dissociates the lithium salt in the electrolyte, the cyclic carbonate-based compound may be preferably used. Since a gel polymer electrolyte having high electrical conductivity may be prepared when the above cyclic carbonate-based compound is mixed with the low viscosity, low permittivity linear carbonate-based compound, such as dimethyl carbonate and diethyl carbonate, and the linear ester-based compound in an appropriate ratio, the cyclic carbonate-based compound may be more preferably used.

In an exemplary aspect, a typical polymerization initiator known in the art may be used as the polymerization initiator. For example, typical examples of the polymerization initiator may include organic peroxides or hydroperoxides, such as benzoyl peroxide, acetyl peroxide, dilauryl peroxide, di-tert-butyl peroxide, t-butyl peroxy-2-ethyl-hexanoate, cumyl hydroperoxide, and hydrogen peroxide, and at least one azo compound selected from the group consisting of 2,2'-azobis(2-cyanobutane), dimethyl 2,2'-azobis(2-methylpropionate), 2,2'-azobis(methylbutyronitrile), 2,2'-azobis(isobutyronitrile) (AIBN) and 2,2'-azobis(dimethylvaleronitrile (AMVN), but are not limited thereto.

The polymerization initiator may be decomposed by heat generated during a thermal curing process or within a battery, for a non-limiting example, heat of 30°C to 100°C, specifically, 60°C to 80°C, to form a radical, and may be reacted with the above-mentioned crosslinkable monomer and optionally some solvent by free radical polymerization to form a gel polymer electrolyte.

The polymerization initiator may be included in an amount of 0.1 part by weight to 5 parts by weight based on 100 parts by weight of the crosslinkable monomer. When the amount of the polymerization initiator is greater than 5 parts by weight, the unreacted polymerization initiator may remain during the production of a gel polymer electrolyte, which may adversely affect battery performance. In contrast, when the amount of the polymerization initiator is less than 0.1 part by weight, the gelation may not proceed smoothly even under conditions above a certain temperature.

Optionally, the electrolyte may also further include an additional additive. As the additional additive which may be used in the present disclosure, vinylene carbonate, vinyl ethylene carbonate, fluoroethylene carbonate, vinylethylene carbonate, cyclic sulfite, saturated sultone, unsaturated sultone, and a non-cyclic sulfone may be used alone or as a mixture of two or more thereof.

In this case, the cyclic sulfite may include ethylene sulfite, methyl ethylene sulfite, ethyl ethylene sulfite, 4,5-dimethyl ethylene sulfite, 4,5-diethyl ethylene sulfite, propylene sulfite, 4,5-dimethyl propylene sulfite, 4,5-diethyl propylene sulfite, 4,6-dimethyl propylene sulfite, 4,6-diethyl propylene sulfite, 1,3-butylene glycol sulfite, and the like, the saturated sultone may include 1,3-propane sultone, 1,4-butane sultone, and the like, the unsaturated sultone may include ethene sultone, 1,3-propene sultone, 1,4-butene sultone, 1-methyl-1,3-propene sultone, and the like, and the non-cyclic sulfone may include divinyl sulfone, dimethyl sulfone, diethyl sulfone, methyl ethyl sulfone, methyl vinyl sulfone, and the like.

The additional additives may be used as a mixture of two or more thereof, and may be included in an amount of 0.01 to 5 wt.%, particularly 0.01 to 3 wt.%, and more particularly 0.05 to 3 wt.% based on the total weight of the electrolyte. If the amount of the additional additive is less than 0.01 wt.%, effects of improving low-temperature output of the battery and improving high-temperature storage characteristics and high-temperature lifetime characteristics are insignificant, and, if the amount of the additional additive is greater than 5 wt.%, there is a possibility that the side reaction in the electrolyte excessively occurs during charge and discharge of the battery. In particular, since the additional additives are not sufficiently decomposed at high temperature when the additives for forming a solid electrolyte interface (SEI) are excessively added, the additional additives may be present as unreacted materials or precipitates in the electrolyte at room temperature. Accordingly, a side reaction may occur in which lifetime or resistance characteristics of the secondary battery are reduced.

### Cathode

In a gel polymer secondary battery according to an aspect of the present disclosure, the cathode may be prepared by forming a cathode mixture layer on a cathode current collector, and then used by impregnating with the catholyte containing a first gel polymer. The cathode mixture layer may be prepared by coating the cathode current collector with a cathode slurry including a cathode active material, a binder, a conductive material, a solvent, and the like, and then drying and rolling the coated cathode collector.

In an exemplary aspect, the catholyte may include a first gel polymer and an electrolyte. Among these, the first gel polymer may include an oligomer or polymer crosslinked in the presence of a polymerization initiator, and the electrolyte may include a lithium salt and a solvent, and optionally an additive. In this case, the catholyte may include a solvent with poor reduction stability or an additive of a cathode coating film forming material. The polymerization initiator, lithium salt, first gel polymer, and crosslinking monomer for forming them, additives, and/or solvents applied to the catholyte may be the same as those applied to the above-mentioned electrolyte layer.

In an exemplary aspect, the first gel polymer may include a crosslinked oligomer or polymer, and may include at least one selected from the group consisting of: a polyether-based oligomer, a polycarbonate-based oligomer, an acrylate-based oligomer, a polysiloxane-based oligomer, a phosphazene-based oligomer, a polyethylene-based oligomer, a urethane-based oligomer, an epoxy-based oligomer, a fluorine-based oligomer, a polyethylene oxide, a polyester sulfide, a polyvinyl alcohol, and a polyvinylidene fluoride. The first gel polymer may be a crosslinked oligomer or polymer in which a crosslinkable monomer and a solvent of an electrolyte, etc. is thermally cured in the presence of a polymerization initiator.

In this case, examples of the crosslinkable monomer may comprise any one selected from ethylene glycol di(meth)acrylate, poly(ethylene glycol)di(meth)acrylate, 1,6-hexanediol di(meth)acrylate, tri(propylene glycol)di(meth)acrylate, tris(2-(meth)acryloxyethyl)isocyanurate, trimethylolpropane tri(meth)acrylate, pentaerythritol di(meth)acrylate, pentaerythritol tri(meth)acrylate, pentaerythritol tetra(meth)acrylate, dipentaerythritol di(meth)acrylate, dipentaerythritol tri(meth)acrylate, dipentaerythritol tetra(meth)acrylate, dipentaerythritol penta(meth)acrylate, dipentaerythritol hexa(meth)acrylate, acrylic acid, isobornyl acrylate, acrylonitrile, ethylene glycol (meth)acrylate, ethylhexyl (meth)acrylate or methyl (meth)acrylate, TMPTA (trimethylpropane triacrylate) and ETPTA (trimethylpropane ethoxylate triacrylate), but not limited thereto.

In an exemplary aspect, the first gel polymer content relative to the total weight of the cathode may be 0.1 to 10 wt.%. For example, the content may be 0.1 to 5 wt.% or 5 to 10 wt.%. In the above range, the gel polymer has a relatively low content compared to the electrolyte layer, and thus, can suppress the flowability to maintain a state in which a heterogenous electrolyte is isolated.

The cathode current collector is not particularly limited so long as it has conductivity without causing chemical changes in the battery, and, for example, stainless steel, aluminum, nickel, titanium, fired carbon, or aluminum or stainless steel of which surface is treated with one of carbon, nickel, titanium, silver, or the like may be used.

The cathode active material is a compound capable of reversibly intercalating and deintercalating lithium, wherein the cathode active material may specifically include a lithium composite metal oxide including lithium and at least one metal such as cobalt, manganese, nickel, or aluminum. More specifically, the lithium composite metal oxide may include lithium-manganese-based oxide (e.g., LiMnO₂, LiMn₂O₄, etc.), lithium-cobalt-based oxide (e.g., LiCoO₂, etc.), lithium-nickel-based oxide (e.g., LiNiO₂, etc.), lithium-nickel-manganese-based oxide (e.g., LiNi_{1-Y}Mn_{Y}O₂ (where 0<Y<1), LiMn_{2-Z}Ni_{z}O4 (where 0<Z<2), etc.), lithium-nickel-cobalt-based oxide (e.g., LiNi_{1-Y1}CoY₁O₂ (where 0<Y1<1), lithium-manganese-cobalt-based oxide (e.g., LiCo_{1-Y2}Mn_{Y2}O₂ (where 0<Y2<1), LiMn_{2-Z1}Co_{z1}O₄ (where 0<Z1<2), etc.), lithium-nickel-manganese-cobalt-based oxide (e.g., Li(NiₚCo_{q}Mnᵣ₁)O₂ (where 0<p<1, 0<q<1, 0<r1<1, and p+q+r1=1) or Li(Niₚ₁Co_{q1}Mnᵣ₂)O₄ (where 0<p1<2, 0<q1<2, 0<r2<2, and p1+q1+r2=2), etc.), or lithium-nickel-cobalt-transition metal (M) oxide (e.g., Li(Niₚ₂Co_{q2}Mnᵣ₃M_{S2})O₂ (where M is selected from the group consisting of Al, Fe, V, Cr, Ti, Ta, Mg, and Mo, and p2, q2, r3, and s2 are atomic fractions of each independent elements, wherein 0<p2<1, 0<q2<1, 0<r3<1, 0<s2<1, and p2+q2+r3+s2=1), etc.), and any one thereof or a compound of two or more thereof may be included.

Among these materials, in terms of the improvement of the capacity characteristics and stability of the battery, the lithium composite metal oxide may include LiCoO₂, LiMnO₂, LiNiO₂, lithium nickel manganese cobalt oxide (e.g., Li(Ni_{1/3}Mn_{1/3}Co_{1/3})O₂, Li(Ni_{0.6}Mn_{0.2}Co_{0.2})O₂, Li(Ni_{0.5}Mn_{0.3}Co_{0.2})O₂, Li(Ni_{0.7}Mn_{0.15}Co_{0.15})O₂ and Li(Ni_{0.8}Mn_{0.1}Co_{0.1})O₂, etc.), or lithium nickel cobalt aluminum oxide (e.g., Li(Ni_{0.8}Co_{0.15}Al_{0.05})O₂, etc.).

The cathode active material may be included in an amount of 80 wt.% to 99.5 wt.%, particularly 85 wt.% to 95 wt.% based on a total weight of solid content in the cathode slurry.

When the amount of the cathode active material is 80 wt.% or less, energy density is decreased and thus, capacity may be reduced.

The binder is a component that assists in the binding between the active material and the conductive material and in the binding with the current collector, wherein the binder is commonly added in an amount of 1 to 30 wt.% based on the total weight of the solid content in the cathode slurry. The binder is added in an amount of 1 to 50 parts by weight, more specifically 3 to 15 parts by weight based on the total weight of the solid content in the cathode slurry. When the amount of the binder is less than 1 part by weight, the adhesion between the electrode active material and the current collector may be insufficient, and when the amount is greater than 50 parts by weight, the adhesion may be improved, but the content of the electrode active material may decrease as much as that, which may lower the battery capacity.

Further, the conductive material is a material that provides conductivity without causing chemical changes in the battery, and can be added in an amount of 1 to 20 wt.% based on the total weight of the solid content in the cathode slurry.

As typical examples of such a conductive material, a conductive material, such as: carbon powder such as carbon black, acetylene black, Ketjen black, channel black, furnace black, lamp black, or thermal black; graphite powder such as natural graphite with a well-developed crystal structure, artificial graphite, or graphite; conductive fibers such as carbon fibers or metal fibers; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives, may be used, and those currently sold under the names, such as acetylene black-based conductive materials (Chevron Chemical Company, Denka black (Denka Singapore Private Limited), or Gulf Oil Company), Ketjen black, ethylene carbonate (EC)-based conductive materials (Armak Company), Vulcan XC-72 (Cabot Company), and Super P (Timcal Graphite & Carbon), may be used.

The solvent may include an organic solvent, such as N-methyl-2-pyrrolidone (NMP), and may be used in an amount such that desirable viscosity is obtained when the cathode active material as well as selectively the binder and the conductive material are included. For example, the solvent may be included in an amount such that a concentration of the solid content in the slurry including the cathode active material as well as selectively the binder and the conductive material is in a range of 10 wt.% to 60 wt.%, preferably 20 wt.% to 50 wt.%.

### Anode

In the gel polymer secondary battery according to the aspect of the present disclosure, the anode may be prepared by forming an anode mixture layer on an anode collector, and then used by impregnating with the anolyte including the second gel polymer. The anode mixture layer may be prepared by coating the anode current collector with an anode slurry including an anode active material, a binder, a conductive material, a solvent, and the like, and then drying and rolling the coated anode current collector.

In an exemplary aspect, the anolyte may include a second gel polymer and an electrolyte. Among these, the second gel polymer may include an oligomer or polymer crosslinked in the presence of a polymerization initiator, and the electrolyte may include a lithium salt and a solvent, and optionally an additive. In this case, the anolyte may include a solvent with poor oxidation stability or an additive of an anode film forming material. The polymerization initiator, lithium salt, second gel polymer, and crosslinking monomer for forming them, additives, and/or solvents applied to the anolyte may be the same as those applied to the above-mentioned electrolyte layer.

In an exemplary aspect, the second gel polymer may include a crosslinked oligomer or polymer, and may include at least one selected from the group consisting of: a polyether-based oligomer, a polycarbonate-based oligomer, an acrylate-based oligomer, a polysiloxane-based oligomer, a phosphazene-based oligomer, a polyethylene-based oligomer, a urethane-based oligomer, an epoxy-based oligomer, a fluorine-based oligomer, a polyethylene oxide, a polyester sulfide, a polyvinyl alcohol, and a polyvinylidene fluoride. The second gel polymer may be a crosslinked oligomer or polymer in which a crosslinkable monomer and a solvent of an electrolyte, etc. is thermally cured in the presence of a polymerization initiator.

In this case, examples of the crosslinkable monomer may comprise any one selected from ethylene glycol di(meth)acrylate, poly(ethylene glycol)di(meth)acrylate, 1,6-hexanediol di(meth)acrylate, tri(propylene glycol)di(meth)acrylate, tris(2-(meth)acryloxyethyl)isocyanurate, trimethylolpropane tri(meth)acrylate, pentaerythritol di(meth)acrylate, pentaerythritol tri(meth)acrylate, pentaerythritol tetra(meth)acrylate, dipentaerythritol di(meth)acrylate, dipentaerythritol tri(meth)acrylate, dipentaerythritol tetra(meth)acrylate, dipentaerythritol penta(meth)acrylate, dipentaerythritol hexa(meth)acrylate, acrylic acid, isobornyl acrylate, acrylonitrile, ethylene glycol (meth)acrylate, ethylhexyl (meth)acrylate or methyl (meth)acrylate, TMPTA (trimethylpropane triacrylate) and ETPTA (trimethylpropane ethoxylate triacrylate), but not limited thereto.

In an exemplary aspect, the second gel polymer content relative to the total weight of the anode may be 0.1 to 10 wt.%. For example, the content may be 0.1 to 5 wt.% or 5 to 10 wt.%. In the above range, the gel polymer has a relatively low content compared to the electrolyte layer, and thus, can suppress the flowability to maintain a state where the heterogenous electrolyte is isolated.

The anode current collector may generally have a thickness of 3 to 500 µm. The anode current collector is not particularly limited so long as it has conductivity without causing chemical changes in the battery, and, for example, copper, stainless steel, aluminum, nickel, titanium, fired carbon, or copper or stainless steel of which surface is treated with one of carbon, nickel, titanium, silver or the like, an aluminum-cadmium alloy, or the like may be used. Also, similar to the cathode current collector, the anode current collector may have fine protrusions and depressions formed on a surface thereof to enhance adherence of an anode active material. For example, the anode current collector may be used in various forms such as a film, a sheet, a foil, a net, a porous body, a foaming body, and a non-woven fabric structure.

Further, the anode active material may comprise a lithium metal, a carbon material capable of reversibly intercalating/deintercalating lithium ions, metals or alloys of lithium and these metals, a metal composite oxide, a material capable of doping and de-doping lithium, and a transition metal oxide.

As the carbon material capable of reversibly intercalating/deintercalating lithium ions, any carbon material may be used without particular limitation so long as it is a carbon-based anode active material generally used in a lithium ion secondary battery, and, as a typical example thereof, crystalline carbon, amorphous carbon, or both thereof may be used. Examples of the crystalline carbon may be graphite such as irregular, planar, flaky, spherical, or fibrous natural graphite or artificial graphite, and examples of the amorphous carbon may be soft carbon (low-temperature fired carbon) or hard carbon, mesophase pitch carbide, fired cokes, and the like.

As the metals or alloys of lithium and these metals, metals selected from the group consisting of Cu, Ni, Na, K, Rb, Cs, Fr, Be, Mg, Ca, Sr, Si, Sb, Pb, In, Zn, Ba, Ra, Ge, Al and Sn or alloys of lithium and these metals may be used.

As the metal composite oxide, at least one selected from the group consisting of PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, LiₓFe₂O₃(0≤x≤1), LiₓWO₂(0≤x≤1), and SnₓMe₁₋ₓMe'_{y}O_{z} (where, Me: Mn, Fe, Pb, Ge; Me': Al, B, P, Si, Group I, II and III elements of the periodic table, halogen; 0<x≤1; 1≤y≤3; 1≤z≤8) may be used.

The material which may be doped and undoped with lithium may include Si, SiOₓ(0 < x < 2), Si-Y alloy (wherein Y is an element selected from the group consisting of an alkali metal, an alkaline earth metal, a Group 13 element, a Group 14 element, a transition metal, a rare earth element, and a combination thereof, and is not Si), Sn, SnO₂, Sn-Y (wherein Y is an element selected from the group consisting of an alkali metal, an alkaline earth metal, a Group 13 element, a Group 14 element, a transition metal, a rare earth element, and a combination thereof, and is not Sn), or the like., and at least one of these may be mixed and used with SiO₂. The element Y may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, and a combination thereof.

The transition metal oxide may include a lithium-containing titanium composite oxide (LTO), vanadium oxide, lithium vanadium oxide, and the like.

The anode active material may be included in an amount of 80 wt.% to 99 wt.% based on the total weight of the solid content in the anode slurry.

The binder is a component that assists in the binding between the conductive material, the active material, and the current collector, and is added in an amount of 1 to 30 wt.% based on the total weight of the solid content in the anode slurry. Examples of the binder may include polyvinylidene fluoride(PVDF), polyvinyl alcohol, carboxymethylcellulose(CMC), starch, hydroxypropyl cellulose, regenerated cellulose, polyvinylpyrrolidone, tetrafluoroethylene, polyethylene, polypropylene, ethylene-propylene-diene polymer(EPDM), a sulfonated-EPDM, a styrene-butadiene rubber, a nitrile-butadiene rubber, a fluoro rubber, various copolymers thereof, or the like.

The conductive material may be the same as that used in the preparation of the cathode, and may be added in an amount of 1 to 20 wt.% based on the total weight of the solid content in the anode slurry.

The solvent may include water or an organic solvent such as NMP (N-methyl-2-pyrrolidone), and may be used in an amount at which the anode active material, and optionally the binder, the conductive material, and the like included with the solvent has a preferred viscosity. For example, the solvent may be included in an amount at which a concentration of a solid content including the anode active material and optionally the binder and the conductive material is 50 wt.% to 95.wt %, preferably 70 wt.% to 90 wt.%.

In an exemplary aspect, the first gel polymer, the second gel polymer, and the third gel polymer may be mutually identical materials, or may be mutually different materials. For example, the first gel polymer may have a functionality of suppressing a specific side reaction at the cathode. On the other hand, the third gel polymer content of the electrolyte layer may be larger than the first gel polymer content of the catholyte and the second gel polymer content of the anolyte, and in this case, the first gel polymer content of the anolyte and the second gel polymer content of the anolyte may be substantially identical or different from each other. That is, the first gel polymer content of the catholyte may be larger or smaller than the second gel polymer content of the anolyte.

In an exemplary aspect, the electrolyte layer may be in direct contact with the cathode and anode. Specifically, an additional layer may not be provided between the electrolyte layer and the cathode or between the electrolyte layer and the anode, and thus at least a part of the electrolyte layer may be in direct contact with the cathode and anode. Therefore, the gel polymer secondary battery according to an aspect of the present disclosure may provide adhesiveness by curing the cathode/separator/anode under a compressed state, and thus may not require a separate adhesive material or stacking process.

### Method for Manufacturing Gel Polymer Secondary Battery

According to another aspect of the present disclosure, there is provided a method for manufacturing a gel polymer secondary battery, the method comprising the steps of: impregnating a spare cathode and a spare anode with a catholyte and an anolyte, respectively, impregnating a separator with a third electrolyte, or preparing an electrolyte layer as a third electrolyte membrane; and stacking the cathode, the electrolyte layer and the anode in this order.

The manufacturing method according to an aspect of the present disclosure can have advantages in terms of safety and cost, since the prior impregnation of the electrode and electrolyte layer is performed followed by the assembly process, thereby capable of reducing the amount of an electrolyte by using a minimum amount of electrolyte. In addition, current mass-production processes can be used in the same manner, except for the electrode electrolyte impregnation and crosslinking process, and thus there may be no need to add or change any special devices.

First, a spare cathode and a spare anode can be impregnated with a catholyte and an anolyte, respectively, to prepare a cathode and an anode. Specifically, a spare cathode prepared by forming a cathode mixture layer on a cathode current collector can be impregnated with a catholyte containing a first gel polymer, and a spare anode prepared by forming an anode mixture layer on the anode current collector can be impregnated with an anolyte containing a second gel polymer. This impregnation can be performed by using a method commonly used in this technical field.

In an exemplary aspect, the impregnation step may be performed at room temperature for 2 to 48 hours for uniform impregnation of the whole cathode and anode. The first gel polymer content relative to the total weight of the cathode after impregnation may be 0.1 to 10 wt.%, and the second gel polymer content relative to the total weight of the anode after impregnation may be 0.1 to 10 wt.%, which corresponds to a lower value than the third gel polymer content relative to the total weight of the electrolyte layer described below.

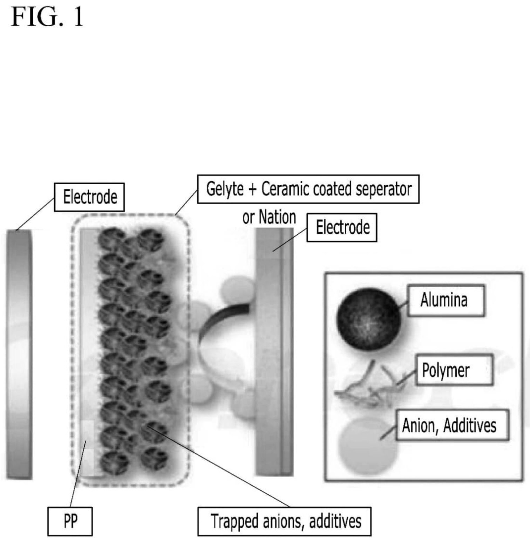

A high content of gel polymer in the electrolyte layer suppresses the movement of substances with large molecular weight between the cathode and anode, and a low content of gel polymer in the electrode suppresses the flowability of the electrolyte. The gel polymer can take advantage of this property to selectively permeate only lithium ions in the cell, and low content gel polymers can be applied to the electrodes to maintain a heterogenous electrolyte in an isolated state. FIG. 1 shows a schematic diagram of the mechanism for suppressing the movement of anions and additives between cathode and anode in a gel polymer secondary battery, wherein the gel polymer matrix is densely formed in a pore space of the coating layer and the separator, so that components larger in size than Li ions are physically isolated between cathode and anode. The separator may also be impregnated with a third electrolyte, or the electrolyte layer may be prepared as a third electrolyte membrane. Specifically, the separator and the third electrolyte may be the same as those described above, and may be impregnated in the same manner as the electrode. Such an electrolyte layer can apply a separator impregnated with a minimum amount of a high-content third electrolyte or a high-content gel polymer thin film, thereby minimizing an increase in resistance.

Next, prior to the stacking step described below, the electrolyte layer may be thermally cured. Specifically, by this thermal curing, a crosslinkable monomer and a solvent, etc. may be crosslinked in the presence of a polymerization initiator, so that a third gel polymer may be formed and included in the electrolyte layer. After impregnation with the electrolyte, the impregnated separator may be first thermally cured so as to prevent it from mixing with the heterogeneous gel electrolyte during the cell assembly and curing process, and then the cell may be assembled so that the heterogenous electrolyte of the electrode may be maintained in an isolated state.

For example, the thermal curing step of the electrolyte layer may be performed at a temperature of 50°C to 100°C for 0.5 to 48 hours, and preferably at a temperature of 60°C to 80°C for 0.5 to 24 hours. Next, the cathode, electrolyte layer, and anode may be sequentially stacked and cured. For example, the cathode, electrolyte layer, and anode may be sequentially arranged to form an electrode assembly. Specifically, the electrode assembly may be a stacked structure which comprises two types of electrodes, i.e., a cathode and an anode, and an electrolyte layer as a separator interposed between electrodes or disposed above or below one of the electrodes to insulate the electrodes from each other. The stacked structure may have various forms without limitation, such as: a cathode and anode of a given standard being stacked with a separator between them, or being wound in the form of a jelly roll. A cathode tab and an anode tab may be connected to the electrode assembly. Specifically, the cathode tab and the anode tab are respectively connected with the cathode and the anode of the electrode assembly, and may protrude to the outside of the secondary battery case to provide a path through which electrons can migrate. The third electrolyte of the electrolyte layer may be previously cured, and thus, can maintain the electrolyte between the cathode and the anode in a state isolated during stacking.

Subsequently, the stacked cathode, electrolyte layer, and anode can be thermally cured, and specifically, the catholyte impregnated in the cathode, the anolyte impregnated in the anode, and the third electrolyte of the electrolyte layer can be cured. This curing step can be performed by a thermal curing process. Through the curing step, the catholyte, anolyte, and electrolyte layer can form a first gel polymer, a second gel polymer, and a third gel polymer, respectively, as a cured crosslinked oligomer or polymer in which a crosslinkable monomer and a solvent of an electrolyte are thermally cured in the presence of a polymerization initiator. For example, the thermal curing step can be performed under the same conditions as the pre-curing of the electrolyte layer, and can be performed at a temperature of 50°C to 100°C for 0.5 to 48 hours, and preferably can be performed at a temperature of 60°C to 80°C for 0.5 to 24 hours.

### [Advantageous Effects]

As set forth above, the gel polymer secondary battery according to an aspect of the present disclosure can suppress the movement of a substance with a large molecular weight between the cathode and anode by applying a high content of gel polymer to an electrolyte layer, and at the same time, can suppress electrolyte flowability by applying a low content of gel polymer to the electrode, thereby selectively permeating only lithium ions within a cell and maintaining the state where the heterogenous electrolyte are isolated. In addition, the gel polymer secondary battery can minimize the increase in resistance by applying a high content of gel polymer to the electrolyte layer.

### [BRIEF DESCRIPTION OF THE DRAWINGS]

FIG. 1 shows a schematic diagram of the mechanism for suppressing the movement of anions and additives between cathode and anode in a gel polymer secondary battery according to an aspect of the present disclosure;
FIG. 2 and FIG. 3 show a comparison of the XPS analysis results of the gel polymer secondary batteries according to Comparative Examples 1 to 3 and Example 1 to 2 of the present disclosure; and
FIG. 4 and FIG. 5show a comparison of the charge/discharge analysis results of the gel polymer secondary batteries according to Examples 3 to 4 of the present disclosure.

### [DETAILED DESCRIPTION OF THE EMBODIMENTS]

Hereinafter, the Examples of the present disclosure will be described in detail so as to be easily carried out by a person with ordinary skill in the art to which the disclosure pertains. However, the present disclosure may be realized in various different forms and is not limited to the Examples and Comparative Examples provided herein.

### Comparative Example 1: 1M LiPF₆-added liquid electrolyte application cell

1M LiPF₆ was dissolved in a solvent (ethylene carbonate(EC): propylene carbonate(PC) = 5:5 volume ratio), and 0.06 wt.% of AIBN was added as a polymerization initiator to prepare a liquid electrolyte. A graphite anode and a PE separator were sequentially stacked, and then the prepared liquid electrolyte was injected to produce a half-cell 'S1'.

### Comparative Example 2: 2M LiFSI-added liquid electrolyte application cell

2M LiFSI was dissolved in a solvent (ethylene carbonate(EC): propylene carbonate(PC) = 5:5 volume ratio), and 0.06 wt.% of AIBN as a polymerization initiator was added thereto to prepare a liquid electrolyte. A graphite anode and a PE separator were sequentially stacked, and then the prepared liquid electrolyte was injected to manufacture a half-cell 'S2'.

### Comparative Example 3: LiPF₆ and LiFSI-mixed gel polymer electrolyte application cell

LiPF₆ and LiFSI were mixed at a ratio of 1:1 wt% in a solvent (ethylene carbonate(EC): propylene carbonate(PC) = 5:5 volume ratio), and 10% of ETPTA (ethoxylated tri-methylolpropane triacrylate) oligomer and 0.06 wt.% of AIBN as a polymerization initiator were added thereto to prepare a gel polymer electrolyte composition. A graphite anode, a PE separator and an NCM 811 cathode were sequentially stacked, and then the prepared liquid electrolyte was injected to produce a half-cell 'S3'.

### Example 1: Heterogeneous gel electrolyte application cell

1M LiPF₆ was dissolved in a solvent (ethylene carbonate(EC): propylene carbonate(PC) = 5:5 volume ratio), and 0.06 wt.% of AIBN as a polymerization initiator was added thereto to prepare an anolyte, and a graphite anode was impregnated therein. In addition, 2M LiFSI was dissolved in a solvent (ethylene carbonate(EC): propylene carbonate(PC) = 5:5 volume ratio), and 0.06 wt.% of AIBN was added as a polymerization initiator to prepare a catholyte, and an NCM 811 cathode was impregnated therein.

Further, 10 wt.% of ETPTA (ethoxylated tri-methylolpropane triacrylate) oligomer and 0.06 wt.% of AIBN as a polymerization initiator were added to a solvent (ethylene carbonate(EC): propylene carbonate(PC) = 5:5 volume ratio) to prepare a gel polymer electrolyte composition, and a PE separator was impregnated therein. The impregnated PE separator was first thermally cured by heat treatment at a temperature of 60°C for 5 hours.

The prepared materials were sequentially stacked in the order of cathode/separator/anode, and thermally cured in a compressed state to produce an 'S4' cell.

### Example 2: Heterogeneous gel electrolyte application cell

An 'S5' cell was produced in the same manner as in Example 1, except that the content of ETPTA oligomer in the gel polymer electrolyte composition was 20 wt.%.

### Experimental Example 1: XPS Analysis

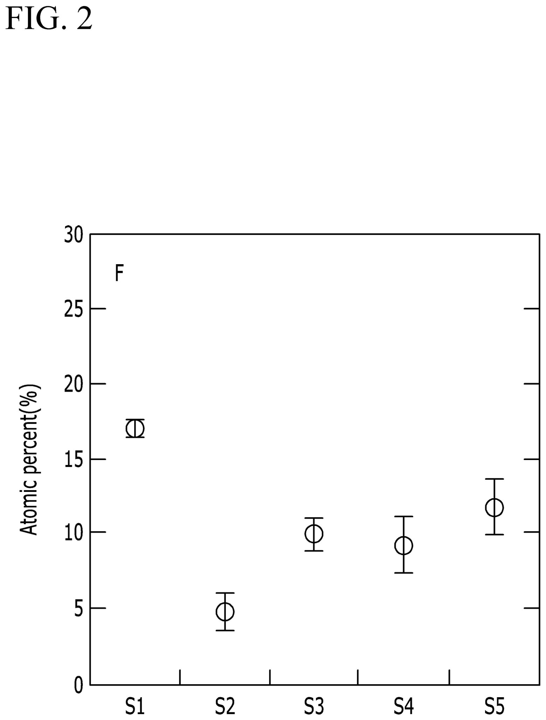

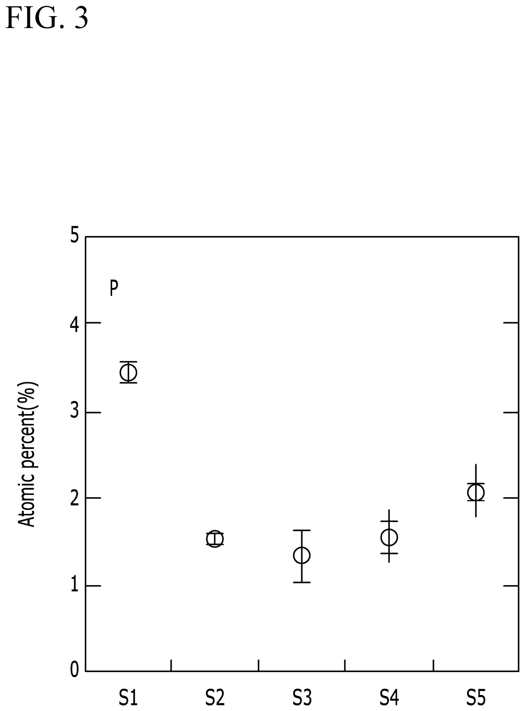

The cells produced in Comparative Example 1-3 and Example 1-2 were charged and discharged three times at 0.1C, and then disassembled to separate an anode. An elemental quantitative analysis of the anode film that changed with the addition of lithium salt was performed using an X-ray photoelectron spectroscopy (XPS, Sigma probe). F and P elements, which account for a large proportion of the formation of the anode film, were analyzed, through which the heterogenous electrolyte isolation of the high-content gel polymer electrolyte was demonstrated. The results are shown in FIG. 2 and FIG. 3.

In FIG. 2 and FIG. 3, it was confirmed that Comparative Example 1 (S1) containing LiPF₆ lithium salt formed a coating film richer in F and P than Comparative Example 2 (S2) containing LiFSI.

Comparative Example 3 (S3) assumes that the high-content gel polymer electrolyte impregnated in the separator does not suppress the mixing of the heterogenous electrolyte between the cathode and anode, which shows the F and P composition ratio corresponding to the intermediate level between Comparative Example 1 (S1) and Comparative Example 2 (S2).

In addition, Example 1 (S4) and Example 2 (S5) are cells that applied a 2M LIFSI-impregnated cathode, a 1M LiPF₆-impregnated anode, and a heterogeneous gel electrolyte, confirming that Example 1 (S5), which applied the high-content gel polymer electrolyte, shows a tendency to form a coating film richer in F and P than Example 2 (S4).

From this, it can be confirmed that the higher the polymer content in the gel polymer electrolyte-impregnated separator of the present disclosure, the more effective it is in isolating the heterogenous electrolyte between the cathode and anode.

### Example 3: Heterogeneous gel electrolyte application cell

1M LiPF₆ was dissolved in a solvent (ethylene carbonate (EC): propylene carbonate (PC) = 5:5 volume ratio), 5 wt.% of ETPTA (ethoxylated tri-methylolpropane triacrylate) oligomer and 0.06 wt.% of AIBN as a polymerization initiator were added to prepare a cathode electrolyte, and the NCM 811 cathode was impregnated therein. In addition, 2M LiFSI was dissolved in a solvent (ethylene carbonate(EC): propylene carbonate(PC) = 5:5 volume ratio), 5 wt.% of ETPTA (ethoxylated tri-methylolpropane triacrylate) oligomer and 0.06 wt.% of AIBN as a polymerization initiator were added thereto to prepare an anolyte, and the graphite anode was impregnated therein.

Further, 20 wt.% of ETPTA (ethoxylated tri-methylolpropane triacrylate) oligomer and 0.06 wt.% of AIBN as a polymerization initiator were added thereto to a solvent (ethylene carbonate(EC): propylene carbonate(PC) = 5:5 volume ratio) to prepare a gel polymer electrolyte composition, and an alumina-coated PP separator was impregnated therein at room temperature. The impregnated separator was first thermally cured by heat treatment at a temperature of 60°C for 5 hours.

The prepared materials were sequentially stacked in the order of cathode/separator/anode, and thermally cured in a compressed state to produce a 'Set1' cell.

### Example 4: Heterogeneous Gel Electrolyte Application Cell

A 'Set2' cell was produced in the same manner as in Example 3, except that LiPF₆ and LiFSI were dissolved in a 1:2 molar ratio in a solvent (ethylene carbonate (EC): propylene carbonate (PC) = 5:5 by volume), and 5 wt.% of ETPTA (ethoxylated tri-methylolpropane triacrylate) oligomer and 0.06 wt.% of AIBN as a polymerization initiator were added thereto to prepare an electrolyte, and the NCM 811 cathode and graphite anode were impregnated therein, respectively.

### Experimental Example 2: Charge-Discharge Analysis

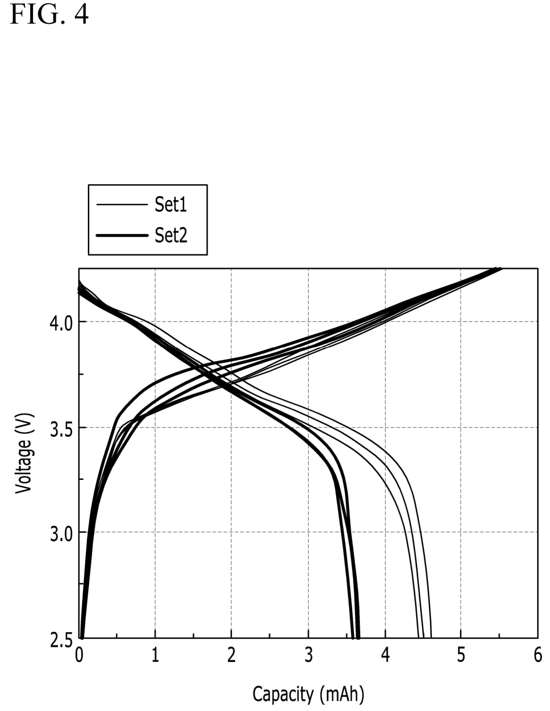

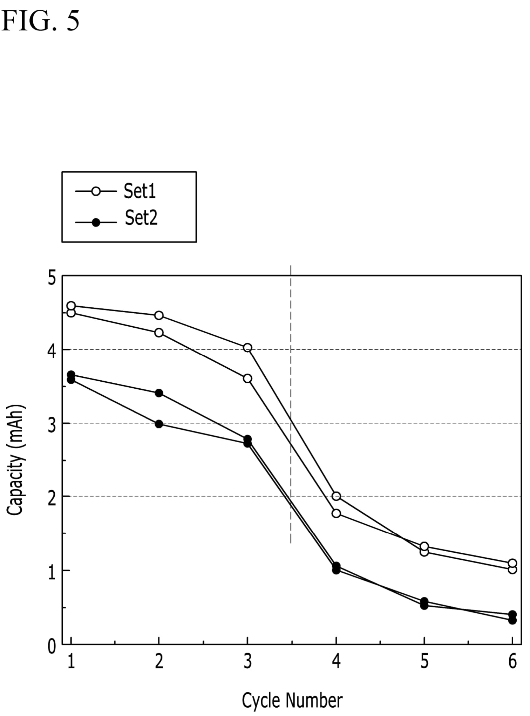

Charge-discharge analysis was performed under 0.1C (applied 0.518 mA) CC/CV charge and CC discharge based on the coin cell capacity (FIG. 4). After cell activation, CC/CV charge and CC discharge were performed at 0.1C for 3 cycles and 0.33C (1.709mA) for 3 cycles to measure the discharge capacity (FIG. 5).

During the initial charging process, PC penetrates into the anode graphite lattice structure in the form of Li-(PC)n coordinated with Li⁺ to cause structural destruction and exfoliation and result in a decrease in capacity, wherein when 2M LiFSI is applied, the coordination number between Li⁺-PC decreases, so that the performance degradation due to exfoliation is significantly reduced.

Referring to FIG. 4 and FIG. 5, Example 4 ('Set2'), which assumes a situation where the electrolyte impregnated in the cathode is moved and mixed with the anode-impregnated electrolyte, shows a tendency to significantly reduce capacity and lifetime. Through this, it can be confirmed that the high-content oligomer gel electrolyte effectively blocks the material transfer between cathode and anode.

### Experimental Example 3: Reduction of electrolyte amount

A total of 8 cells applying the heterogeneous gel electrolyte of Example 3 were produced, and the average value of the cell weight was calculated as shown in Table 1 below. The electrolyte excess amount was calculated from the average value of the cell weight in Table 2. At this time, the electrolyte density was 1.388 g/mol, and the polymer content relative to the entire electrolyte of the cell was 6.6%.

**[Table 1]**

| Sample | Weight (mg) |
|---|---|
| Cell 1 | 902.5 |
| Cell 2 | 921.1 |
| Cell 3 | 931.4 |
| Cell 4 | 914.5 |
| Cell 5 | 929.5 |
| Cell 6 | 897.2 |
| Cell 7 | 979.3 |
| Cell 8 | 912.9 |
| Weight average | 923.6 |

**[Table 2]**

| | Weight (mg) |
|---|---|
| Mono-cell | 923.6 |
| Cathode + anode + separator | 683.1 |
| Electrolyte | 240.5 |
| | Volume(µℓ) / excess amount |
| Tailored mono-cell electrolyte | 161.8 / 118% |

As a result, it can be confirmed that the electrolyte can be reduced by about 10% compared to the liquid electrolyte application LIB (excess amount = about 130%), and that the amount of electrolyte reduction increases as the polymer content increases.

Therefore, the gel polymer secondary battery according to the present disclosure can maintain the isolation of the heterogenous electrolyte between cathode and anode by applying a high content of gel polymer electrolyte, and have a wide operating voltage range and an effect of reducing the amount of electrolyte.

## Claims

1. A gel polymer secondary battery comprising:
a cathode impregnated with a catholyte containing a first gel polymer;
an anode impregnated with an anolyte containing a second gel polymer; and
an electrolyte layer interposed between the cathode and the anode and including a third gel polymer,
wherein a third gel polymer content of the electrolyte layer is larger than a first gel polymer content of the cathode and a second gel polymer content of the anode.

2. The gel polymer secondary battery according to claim 1, wherein the electrolyte layer is an electrolyte membrane including the third gel polymer or a separator that is impregnated with tan electrolyte containing the third gel polymer.

3. The gel polymer secondary battery according to claim 1, wherein the electrolyte layer is a polymer separator that is impregnated with an electrolyte containing the third gel polymer and coated with alumina.

4. The gel polymer secondary battery according to claim 1, wherein the third gel polymer content is from 10 to 30 wt.% relative to the total weight of the electrolyte layer.

5. The gel polymer secondary battery according to claim 4, wherein the third gel polymer content is from 20 to 30 wt.% relative to the total weight of the electrolyte layer.

6. The gel polymer secondary battery according to claim 1, wherein
the first gel polymer content is from 0.1 to 10 wt.% relative to the total weight of the cathode, and
the second gel polymer content is from 1 to 10 wt.% relative to the total weight of the anode.

7. The gel polymer secondary battery according to claim 1, wherein a difference between the third gel polymer content and the first gel polymer content, and a difference between the third gel polymer content and the second gel polymer content are each from 10 to 20 wt.%.

8. The gel polymer secondary battery according to claim 1, wherein the first gel polymer, the second gel polymer, and the third gel polymer each comprises at least of a polyether-based oligomer, a polycarbonate-based oligomer, an acrylate-based oligomer, a polysiloxane-based oligomer, a phosphazene-based oligomer, a polyethylene-based oligomer, a urethane-based oligomer, an epoxy-based oligomer, a fluorine-based oligomer, a polyethylene oxide, a polyester sulfide, a polyvinyl alcohol, or a polyvinylidene fluoride.

9. The gel polymer secondary battery according to claim 1, wherein the electrolyte layer is in direct contact with the cathode and the anode.

10. A method for manufacturing a gel polymer secondary battery, the method comprising:
preparing a cathode impregnated with a catholyte by impregnating a cathode with the catholyte;
preparing an anode impregnated with an anolyte by impregnating an anode with the anolyte;
preparing an electrolyte layer by impregnating a separator with an electrolyte, or preparing the electrolyte layer as an electrolyte membrane that includes the electrolyte; and
stacking the cathode impregnated with the catholyte, the electrolyte layer, and the anode impregnated with the anolyte in this order.

11. The method for manufacturing a gel polymer secondary battery according to claim 10, further comprising at least one of:
thermally curing the catholyte after preparing the cathode impregnated with the catholyte;
thermally curing the anolyte after preparing the anode impregnated with the anolyte; or
thermally curing the electrolyte after preparing the electrolyte layer.
